# EUROPEAN PATENT APPLICATION

(11) **EP 0 918 330 A1**
(43) Date of publication of application: **26.05.1999**
(21) Application number: 96926593.3
(22) Date of filing: 08.08.1996
(51) Int. Cl.: G11B 23/033

(54) **MAGNETIC DISK CARTRIDGE AND METHOD FOR MANUFACTURING THE SAME**

(71) Applicant: FUJI PHOTO FILM CO., LTD., Kanagawa 250-01 (JP); IOMEGA CORPORATION, Roy, Utah 84067 (US)
(72) Inventor: MIZUTA, Akira, Odawara-shi, Kanagawa-ken 250 (JP)
(74) Representative: Grünecker, Kinkeldey, Stockmair & Schwanhäusser Anwaltssozietät
(86) International application number: JP9602238
(87) International publication number: WO9807156

(57) **Abstract**

In a magnetic disk cartridge having a liner (4) on the internal face (2a) of its cassette shell facing a magnetic disk, recesses (5) are formed, for example, radially in an area of the internal surface (2a) and the liner (4) is attached to at least the recesses (5). Therefore, the liner (4) attached to the internal face (2a) does not slack even when the environment changes and the liner (4) is always in contact with the magnetic disk with high precision.

## Description

### TECHNICAL FIELD

This invention relates to a magnetic disk cartridge and a process for producing the magnetic disk cartridge. This invention particularly relates to a magnetic disk cartridge, wherein a liner is applied to the inner surface of a cassette shell, in which a magnetic disk is incorporated such that the magnetic disk can rotate, and a process for producing the magnetic disk cartridge.

### BACKGROUND ART

Magnetic disk cartridges comprise a thin type of cassette shell and a magnetic disk, which is incorporated in the cassette shell such that it can rotate and on which analog or digital signals are to be recorded magnetically. The cassette shell takes on the form of a flat prismatic shape and comprises an approximately square top surface having an area slightly larger than the area of the magnetic disk, a bottom surface having an opening, through which a center core for supporting the center of the magnetic disk is exposed to the exterior, and a side surface having a narrow width and extending between the periphery of the top surface and the periphery of the bottom surface. The magnetic disk cartridge is provided with an opening for insertion of a magnetic head, through which the magnetic head for magnetically recording and reproducing signals is to be inserted from the exterior such that the magnetic head can be brought into contact with the surfaces of the magnetic disk or can be brought to positions close to the surfaces of the magnetic disk. Also, the magnetic disk cartridge is provided with a shutter for opening and closing the opening for insertion of the magnetic head. When the magnetic disk cartridge is not used, the shutter closes the opening for insertion of the magnetic head such that dust, debris, or the like, may not enter into the magnetic disk cartridge.

Liners constituted of nonwoven fabrics, or the like, are applied to the inner surfaces of the cassette shell, which stand facing the magnetic disk. When the magnetic disk is rotated, the liners serve to prevent the surfaces of the magnetic disk from being scratched and to remove dust, debris, or the like, from the surfaces of the magnetic disk.

In conventional magnetic disk cartridges, there is a sufficient spacing in the cassette shell along the thickness direction of the magnetic disk accommodated therein. Each of the liners is pushed up from the inner surface of the cassette shell by a weak leaf spring-like lifter. The liner is thereby urged toward the magnetic disk and kept in sufficient contact with the magnetic disk. Therefore, the entire area of the liner is not adhered to the inner surface of the cassette shell. For example, only the peripheral portions of the liner are adhered to the inner surface of the cassette shell with ultrasonic welding, or the like.

Recently, a magnetic disk cartridge, which has a recording capacity 50 times as large as the recording capacity of the conventional magnetic disk cartridge (3.5-inch floppy disk) by virtue of a new high-density recording system, has been developed. In the developed magnetic disk cartridge, such that a high recording density and a high signal transfer rate may be obtained, the magnetic disk is rotated at a markedly higher speed than the speed, at which the magnetic disk in the conventional magnetic disk cartridges is rotated. Also, when signals are recorded on the magnetic disk accommodated in the developed magnetic disk cartridge and are reproduced therefrom, the position of the magnetic disk must be adjusted with a very high accuracy with respect to a magnetic head.

In cases where there is a large spacing in the cassette shell as in the conventional magnetic disk cartridges, vibrations are apt to occur, the accuracy of the position of the magnetic disk with respect to the magnetic head cannot always be kept high, and other drawbacks are encountered. Therefore, in order for the requirements for the quick rotation and the high positional accuracy to be satisfied, it is not desirable that there is a large spacing in the cassette shell. Instead, approximately the entire area of the liner, which has been applied to the inner surface of the cassette shell, and the magnetic disk should be kept in slight contact with each other with a high accuracy.

However, in general, the liners constituted of nonwoven fabrics, or the like, have the moisture absorbing properties and expand or contract due to a change in ambient conditions, particularly a change in humidity. Therefore, when the magnetic disk cartridge is placed in a high-humidity atmosphere, the liner located in the magnetic disk cartridge becomes slackened, and there occurs the risk that undesirable local contact occurs between the slackened liner and the magnetic disk.

If the slackened liner comes into undesirable contact with the quickly rotating magnetic disk, the stable quick rotation of the magnetic disk will be obstructed. Also, a failure will occur due to heat generated at portions of contact between the slackened liner and the magnetic disk or electrostatic charges generated by the contact therebetween.

Further, in an example of a magnetic disk cartridge, an opening for insertion of the magnetic head is formed in one of side surfaces of the cassette shell, which opening has a size giving access to the surfaces of the magnetic disk from the exterior. In such cases, a magnetic head for recording and reproducing signals is inserted through the opening for insertion of the magnetic head and brought to a position in the vicinity of the quickly rotating magnetic disk in order to record signals on the magnetic disk or to reproduce signals from the magnetic disk. Therefore, it is necessary for the cassette shell to have a predetermined thickness that enables the insertion of the magnetic head.

The magnetic disk, which is quickly rotated in the cassette shell, is constituted of a flexible material. Therefore, it is necessary for a flapping motion of the magnetic disk during its rotation to be restricted. For such purposes, high-accuracy appropriate dimensions (in general, the dimensions of the sum of the thickness of the magnetic disk, the thickness of the liners, and slight clearances) are required in the internal space of the cassette shell. In order for the dimensions to be obtained with a high accuracy, the cassette shell should have a sufficient rigidity, and therefore it should have a sufficient thickness.

For the reasons described above, it is necessary that the thickness of the cassette shell be, for example, at least two times as large as the thickness (approximately 3mm) of the cassette shell of the conventional 3.5-inch floppy disk. In such cases, the wall thicknesses of cassette shell halves, which are combined with and secured to each other to constitute the cassette shell, become considerably thick.

However, the problems occur in that the cassette shell having such a thick-wall structure becomes heavy in weight. Further, large amounts of materials and long molding time spans are required during the production of the cassette shell, and therefore the cost of the cassette shell cannot be kept low.

The primary object of the present invention is to provide a magnetic disk cartridge, wherein there is no risk that a liner becomes slackened even when ambient conditions change, and wherein the weight of a cassette shell is kept light. Another object of the present invention is to provide a process for producing the magnetic disk cartridge.

### DISCLOSURE OF INVENTION

The present invention provides a magnetic disk cartridge comprising a cassette shell, in which a magnetic disk is incorporated such that the magnetic disk can rotate, and a liner applied to the inner surface of the cassette shell, which inner surface stands facing the magnetic disk,
wherein a plurality of recesses are formed in a liner applying region of the inner surface of the cassette shell, and the liner is applied to the inner surface of the cassette shell such that the liner may be adhered at least to positions in the recesses.

Specifically, the recesses, which are formed in the liner applying region of the inner surface of the cassette shell, may be located in a radial pattern extending radially from a point, which stands facing the center point of the magnetic disk. Alternatively, the recesses, which are formed in the liner applying region of the inner surface of the cassette shell, may be located in a checkered pattern. As another alternative, the recesses, which are formed in the liner applying region of the inner surface of the cassette shell, may be located in a spiral pattern extending spirally from a point, which stands facing the center point of the magnetic disk. (If the recesses are located in a concentric circle pattern, the contact pressure between the liner and the magnetic disk will vary for different tracks on the magnetic disk. Therefore, the concentric circle pattern is not much preferable.)

Further, the liner may be applied to the inner surface of the cassette shell such that the liner may also be adhered to portions of the inner surface of the cassette shell, which portions are located between the recesses.

The present invention also provides a process for producing a magnetic disk cartridge provided with a cassette shell, in which a magnetic disk is incorporated such that the magnetic disk can rotate, and a liner applied to the inner surface of the cassette shell, which inner surface stands facing the magnetic disk, the process comprising the steps of:
i) forming a plurality of recesses in a liner applying region of the inner surface of the cassette shell, and
ii) adhering the liner at least to positions in the recesses.

In the process for producing a magnetic disk cartridge in accordance with the present invention, the step of adhering the liner at least to positions in the recesses may be carried out with an ultrasonic welding technique.

With the magnetic disk cartridge in accordance with the present invention, a plurality of recesses are formed in the liner applying region of the inner surface of the cassette shell, and the liner is adhered at least to the positions in the recesses. Therefore, the liner is always pulled by the protruding portions, which are the portions of the inner surface of cassette shell located between the recesses. Accordingly, even if the magnetic disk cartridge is used under high-humidity ambient conditions, there will be no risk that the liner becomes slackened, and the torque given by the liner to the magnetic disk can be kept constant.

Also, in cases where the recesses are located in the radial pattern, the checkered pattern, or the spiral pattern, approximately the entire area of the liner can be uniformly brought into contact with the magnetic disk with a high accuracy.

Further, since the plurality of the recesses are formed in the inner surface of the cassette shell, the weight of the cassette shell can be kept small, and its productivity can be kept high.

### BRIEF DESCRIPTION OF DRAWINGS

Figure 1 is a plan view showing a liner and a pattern of recesses, which are formed in a liner applying region of the inner surface of a cassette shell in a first embodiment of the magnetic disk cartridge in accordance with the present invention,
Figure 2 is an enlarged perspective view showing part of the liner and part of the recesses shown in Figure 1,
Figure 3 is an enlarged sectional view showing the liner applied to the inner surface of the cassette shell,
Figure 4 is a plan view showing a pattern of recesses, which are formed in a liner applying region of the inner surface of a cassette shell in a second embodiment of the magnetic disk cartridge in accordance with the present invention, and
Figure 5 is an enlarged perspective view showing part of the recesses shown in Figure 4.

### BEST MODE OF CARRYING OUT THE INVENTION

The present invention will hereinbelow be described in further detail with reference to the accompanying drawings.

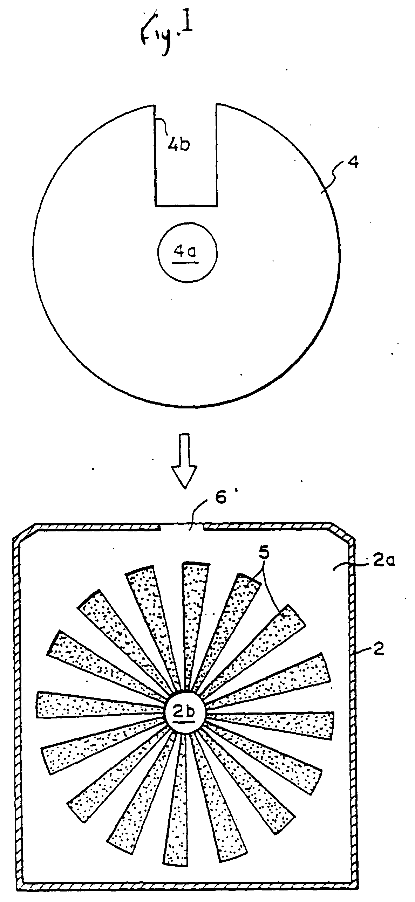

Figure 1 shows a first embodiment of the magnetic disk cartridge in accordance with the present invention. A cassette shell of the magnetic disk cartridge is constituted of a pair of cassette shell halves, one of which is shown in Figure 1. A cassette shell half 2 has a circular hole 2b, through which a center core for supporting the center point of a magnetic disk is exposed to the exterior.

A doughnut-shaped liner 4 has approximately the same shape as the magnetic disk (not shown) and is provided with a circular hole 4a, which is slightly larger than the circular hole 2b. The liner 4 is applied to an inner surface 2a of the cassette shell half 2 such that the circular hole 2b and the circular hole 4a may be aligned with each other.

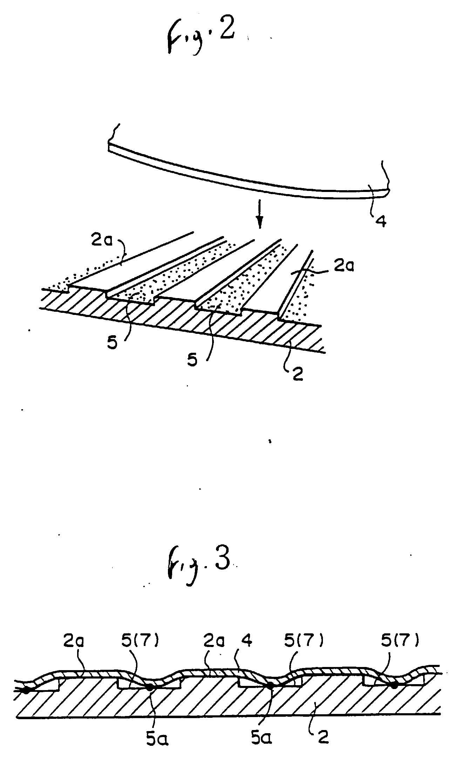

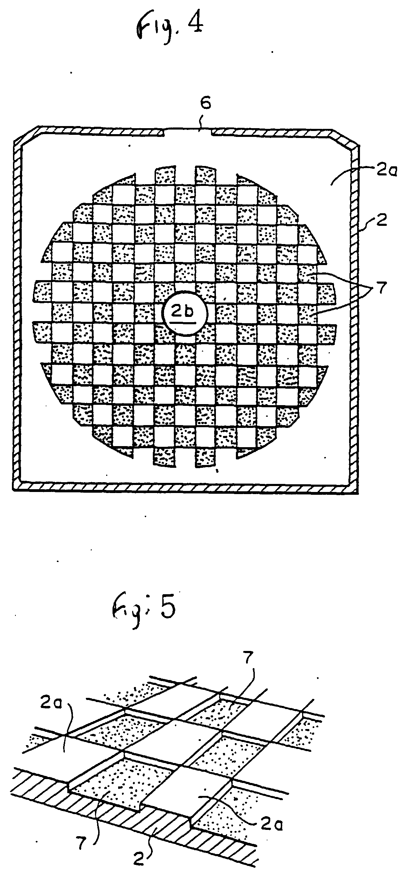

In this embodiment, a plurality of recesses 5, 5, ... are formed in the region of the inner surface 2a of the cassette shell half 2, to which region the liner 4 is to be applied. As illustrated in Figure 2, the recesses 5, 5, ... are located in a radial pattern extending radially outwardly from the circular hole 2b. As illustrated in Figure 3, the liner 4 is applied to the inner surface 2a of the cassette shell half 2 such that the liner 4 may be adhered with ultrasonic welding at least at welding points 5a, 5a, ... in the recesses 5, 5, ..., which are located in the radial pattern. In Figure 1, the recesses 5, 5, ... located in the radial pattern are indicated by putting small dots to the recesses 5, 5, ...

As described above, the liner 4 is adhered to the positions in the recesses 5, 5, ... Therefore, the liner 4 is always pulled by the protruding portions, which are located between the recesses 5, 5, ... Accordingly, even if the magnetic disk cartridge is used under high-humidity ambient conditions, there will be no risk that the liner 4 becomes slackened, and the torque given by the liner 4 to the magnetic disk can be kept constant.

Further, since the plurality of the recesses 5, 5, ... are formed in the inner surface of the cassette shell, the weight of the cassette shell can be kept small, and its productivity can be kept high.

The same recesses 5, 5, ... are also formed in the radial pattern in the inner surface of the cassette shell half other than the cassette shell half 2 having the circular hole 2b, through which the center core is exposed to the exterior. A liner 4 is applied to the inner surface of the other cassette shell half in the same manner as that in the cassette shell half 2. The portion of the liner 4, which portion stands facing the other end of the center core, should preferably be provided with a circular hole such that the liner 4 may not interfere with the center core.

Also, in this embodiment, the cassette shell half 2 is provided with an opening 6 for insertion of a magnetic head, through which the magnetic head for magnetically recording and reproducing signals is to be inserted from the exterior such that the magnetic head can be brought into contact with the surfaces of the magnetic disk or can be brought to positions close to the surfaces of the magnetic disk. The opening 6 for insertion of the magnetic head is formed by cutting away a portion of a side wall of the cassette shell half 2. The top and bottom surfaces of the cassette shell are not provided with an opening for insertion of the magnetic head. The liner 4 is provided with a cutaway portion 4b for insertion of the magnetic head. The cutaway portion 4b for insertion of the magnetic head is formed by cutting away a portion of the liner 4 in the radial direction. The cutaway portion 4b for insertion of the magnetic head may continue into the circular hole 4a.

The ultrasonic welding of the liner 4 to the inner surface 2a of the cassette shell half 2 may be carried out only at the positions in the recesses 5, 5, ... Alternatively, the ultrasonic welding of the liner 4 may be carried out at the positions in the recesses 5, 5, ... and at the protruding portions, which are located between the recesses 5, 5, ..., i.e., at positions on the inner surface of the cassette shell half 2. In the latter case, the liner 4 should preferably be firstly welded to the protruding portions and then be welded to the positions in the recesses 5, 5, ...

Also, a protruding portion, which has a top surface located at a level lower than the inner surface 2a of the cassette shell half 2, may be formed on the bottom surface of each of the recesses 5, 5, ... The liner 4 may then be welded to the top surface of the protruding portion formed in the recess 5.

Figure 4 shows a second embodiment of the magnetic disk cartridge in accordance with the present invention. In this embodiment, a plurality of recesses 7, 7, ... are formed in the region of the inner surface 2a of the cassette shell half 2, to which region the liner 4 is to be applied. As illustrated in Figure 5, the recesses 5, 5, ... are located in a checkered pattern. In the same manner as that shown in Figure 3, the liner 4 is applied to the inner surface 2a of the cassette shell half 2 such that the liner 4 may be adhered with ultrasonic welding at least to the positions in the recesses 7, 7, ..., which are located in the checkered pattern. In Figure 4, the recesses 7, 7, ... located in the checkered pattern are indicated by putting small dots to the recesses 7, 7, ...

The recesses, which are formed in the liner applying region of the inner surface 2a of the cassette shell half 2, may be located in various other patterns. For example, though not shown, the recesses may be located in a spiral pattern extending spirally from the point, which stands facing the center point of the magnetic disk, or in a composite pattern of the radial pattern and the spiral pattern.

## Claims

1. A magnetic disk cartridge comprising a cassette shell, in which a magnetic disk is incorporated such that the magnetic disk can rotate, and a liner applied to the inner surface of the cassette shell, which inner surface stands facing the magnetic disk,
wherein a plurality of recesses are formed in a liner applying region of the inner surface of the cassette shell, and the liner is applied to the inner surface of the cassette shell such that the liner may be adhered at least to positions in said recesses.

2. A magnetic disk cartridge as defined in Claim 1 wherein said recesses, which are formed in said liner applying region of the inner surface of the cassette shell, are located in a radial pattern extending radially from a point, which stands facing the center point of the magnetic disk.

3. A magnetic disk cartridge as defined in Claim 1 wherein said recesses, which are formed in said liner applying region of the inner surface of the cassette shell, are located in a checkered pattern.

4. A magnetic disk cartridge as defined in Claim 1 wherein said recesses, which are formed in said liner applying region of the inner surface of the cassette shell, are located in a spiral pattern extending spirally from a point, which stands facing the center point of the magnetic disk.

5. A magnetic disk cartridge as defined in any one of Claims 1 to 4 wherein the liner is applied to the inner surface of the cassette shell such that the liner may also be adhered to portions of the inner surface of the cassette shell, which portions are located between said recesses.

6. A process for producing a magnetic disk cartridge provided with a cassette shell, in which a magnetic disk is incorporated such that the magnetic disk can rotate, and a liner applied to the inner surface of the cassette shell, which inner surface stands facing the magnetic disk, the process comprising the steps of:
i) forming a plurality of recesses in a liner applying region of the inner surface of the cassette shell, and
ii) adhering the liner at least to positions in said recesses.

7. A process as defined in Claim 6 wherein the step of adhering the liner at least to positions in said recesses is carried out with an ultrasonic welding technique.
